# EUROPÄISCHE PATENTSCHRIFT

(11) **EP 0 538 440 B1**
(45) Veröffentlichungstag und Bekanntmachung des Hinweises auf die Patenterteilung: **19.10.1994**
(21) Anmeldenummer: 92910204.4
(22) Anmeldetag: 08.05.1992
(51) Int. Cl.: B23D 63/00

(54) **SÄGEBLATT-KLEMMVORRICHTUNG FÜR SÄGENBEARBEITUNGSMASCHINEN**
SAW BLADE CLAMPING DEVICE FOR SAW PROCESSING MACHINES
DISPOSITIF DE SERRAGE DE LAMES DE SCIE POUR MACHINES A USINER DES SCIES

(30) Priorität: 10.05.1991 DE 4115319
(43) Veröffentlichungstag der Anmeldung: 28.04.1993
(73) Patentinhaber: VOLLMER WERKE MASCHINENFABRIK GMBH, D-88400 Biberach (DE)
(72) Erfinder: LENARD, Peter, D-7950 Biberach/Riss (DE); RIEHLEIN Fritz, D-7950 Biberach/Riss (DE); REIMANN, Hans-Joachim, D-7904 Dellmensingen (DE)
(74) Vertreter: Goetz, Rupert, Dipl.-Ing.
(86) Internationale Anmeldenummer: EP9201009
(87) Internationale Veröffentlichungsnummer: WO9220486

(56) Entgegenhaltungen:
- DE-A- 3 600 882
- DE-C- 0 901 727
- FR-A- 2 516 829

## Beschreibung

Die Erfindung betrifft eine Sägeblatt-Klemmvorrichtung für Sägenbearbeitungsmaschinen, mit einem ortsfesten Klemmbacken und einem beweglichen Klemmbacken, der gelenkig mit einer Konsole verbunden und in einer Klemmstellung festspannbar ist, in der er ein Sägeblatt gegen den ortsfesten Klemmbacken drückt.

Die Bezeichnung eines Klemmbackens als ortsfest soll im vorliegenden Zusammenhang bedeuten, daß der Klemmbacken bei der gesamten Bearbeitung eines Sägeblattes und normalerweise auch mehrerer aufeinanderfolgender gleicher Sägeblätter eine bestimmte Stellung an einer Sägenbearbeitungsmaschine einnimmt. Dies schließt jedoch nicht aus, daß der ortsfeste Klemmbacken zum Umrüsten der Sägenbearbeitungsmaschine einstellbar ist, beispielsweise zur Anpassung an Sägeblätter unterschiedlicher Dicke oder unterschiedlicher Zahnhöhe.

Es ist seit langem üblich, Sägeblätter in möglichst unmittelbarer Nähe einer Bearbeitungsstelle, an der beispielsweise Zahnflächen geschliffen werden, zwischen einem im vorstehenden Sinne ortsfesten Klemmbacken und einem beweglichen Klemmbacken derart zu klemmen, daß eine genaue und weitgehend schwingungsfreie Bearbeitung möglich ist. Dabei wird die Klemmkraft meist so gewählt, daß die durch sie hervorgerufene Reibung jede unbeabsichtigte Verschiebung des Sägeblattes verhindert, die erforderlichen Vorschubbewegungen jedoch möglich ist, ohne daß die Klemmvorrichtung geöffnet wird.

Bei bekannten Sägeblatt-Klemmvorrichtungen (DE-PS 874551) ist der bewegliche Klemmbacken an einem Traghebel angeordnet, der an einer Konsole auf einer waagerechten Achse gelagert ist, in einer senkrechten Klemmstellung verriegelbar ist und aus dieser Klemmstellung nach vorne, zum Benutzer hin herunterschwenkbar ist. Der Traghebel hat deshalb einen erheblichen Platzbedarf in dem Bereich, in dem der Benutzer sich möglichst ungehindert bewegen können soll, um jeweils ein Sägeblatt in die Klemmvorrichtung einzulegen, die zugehörige Bearbeitungsmaschine einzurichten und das Sägeblatt nach dessen Bearbeitung herauszunehmen. Vor allem die Handhabung größerer Kreissägen oder Bandsägen, für die ein Hebezeug erforderlich ist, kann durch den nach unten geschwenkten Traghebel merklich erschwert werden, weil der Benutzer sich auf das Steuern des Hebezeugs und die dadurch hervorgerufenen Bewegungen des Sägeblatts konzentrieren muß und nicht in erster Linie darauf achten kann, daß er nicht gegen den Traghebel stößt.

Der Erfindung liegt deshalb die Aufgabe zugrunde, eine Sägeblatt-Klemmvorrichtung derart weiterzubilden, daß sie den Benutzer beim Einlegen und Entnehmen eines Sägeblattes in eine bzw. aus einer Sägenbearbeitungsmaschine und beim Einrichten der Maschine möglichst wenig behindert.

Die Aufgabe ist erfindungsgemäß ausgehend von einer Sägeblatt-Klemmvorrichtung der eingangs beschriebenen Gattung dadurch gelöst, daß der bewegliche Klemmbacken an einem Tragkörper abgestützt ist, der für eine leicht bogenförmige, von der Sägeblattebene nur geringfügig abweichende, Bewegung des beweglichen Klemmbackens vom ortsfesten Klemmbacken weg mittels einer Flachführung an der Konsole verschiebbar geführt ist, an dieser festspannbar ist und mit der Konsole zusätzlich durch eine Viergelenkanordnung verbunden ist.

Damit wird erreicht, daß der bewegliche Klemmbacken sich beim Öffnen der Klemmvorrichtung zwar zu Beginn seiner leicht bogenförmigen Bewegung soweit von der Sägeblattebene entfernt, daß er nicht an verschränkten oder verdickten, beispielsweise gestauchten oder hartmetallbestückten Zahnspitzen hängenbleiben kann, sich dann aber auf seinem Weg vom Sägeblatt weg nur wenig von der Sägeblattebene entfernt. In entsprechender Weise nähert sich der bewegliche Klemmbacken beim Schließen der Klemmvorrichtung seiner Schließstellung auf einer flachen Bahn derart, daß er von der Sägeblattebene stets nur einen gerade ausreichenden Abstand hat, um nicht gegen einen Zahn zu stoßen, wenn das Sägeblatt wellig sein sollte. Infolgedessen beansprucht die erfindungsgemäße Sägeblatt-Klemmvorrichtung für ihre Öffnungs- und Schließbewegungen nur wenig Raum im Arbeitsbereich des Benutzers.

Die Flachführung kann zwei einander zugewandte parallele, zur Sägeblattebene normale, ebene Führungsflächen aufweisen, zwischen denen der Tragkörper verschiebbar ist. Es ist aber auch eine Umkehrung dergestalt möglich, daß der Tragkörper rittlings auf einer Flachführung angeordnet ist, die zwei voneinander abgewandte Führungsflächen aufweist.

Vorzugsweise ist die Flachführung gegen die Waagerechte geneigt. Damit wird erreicht, daß der Klemmbacken auf kurzem Weg, beispielsweise schräg nach oben, aus dem Arbeitsbereich der zugehörigen Sägenbearbeitungsmaschine herausbewegbar ist und dennoch für den Benutzer leichter erreichbar bleibt als bei einer senkrechten Anordnung der Flachführung.

Weitere vorteilhafte Erfindungsmerkmale ergeben sich aus den Ansprüchen 4 bis 8.

Ein Ausführungsbeispiel der Erfindung wird im folgenden anhand schematischer Zeichnungen mit weiteren Einzelheiten erläutert. Es zeigen:

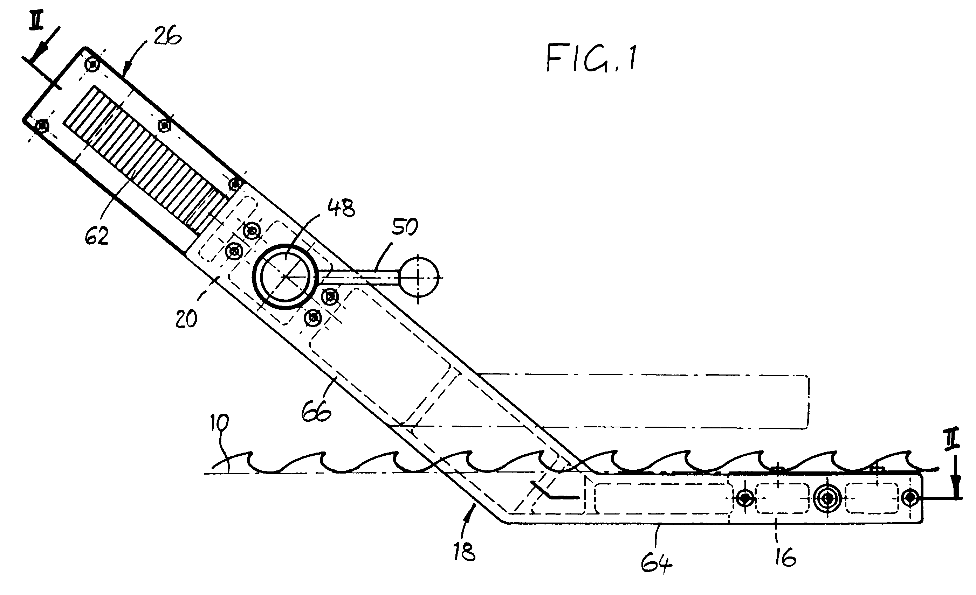

- Fig. 1: die Vorderansicht einer erfindungsgemäßen Sägeblatt-Klemmvorrichtung und

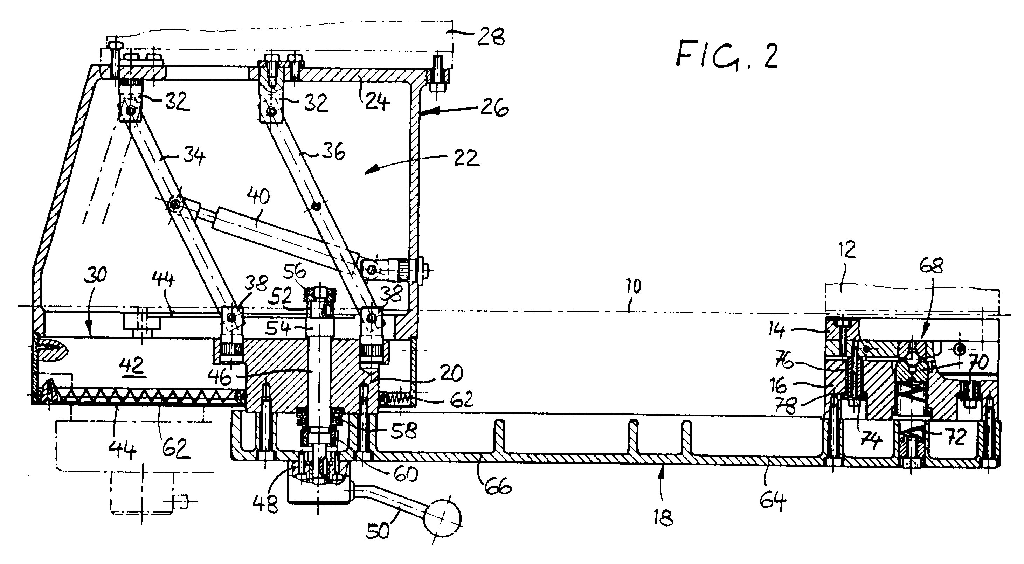

- Fig. 2: den abgewinkelten Schnitt II-II in Fig. 1.

Zum Klemmen eines Sägeblattes 10 - dargestellt ist als Beispiel ein Bandsägeblatt - sind ein ortsfester Klemmbacken 12 und ein beweglicher Klemmbacken 14 vorgesehen. Der bewegliche Klemmbacken 14 ist gelenkig an einem Kopfstück 16 abgestützt, das über einen abgewinkelten Arm 18 an einem Tragkörper 20 befestigt ist. Der Tragkörper 20 ist über eine Viergelenkanordnung 22 an einer Rückwand 24 einer gehäuseartigen Konsole 26 gelagert. Die Konsole 26 ist dazu bestimmt, an einem mit strichpunktierten Linien angedeuteten Maschinengestell 28 einer Sägenbearbeitungsmaschine befestigt zu werden, an der auch der ortsfeste Klemmbacken 12 abgestützt ist.

Die Viergelenkanordnung 22 ist von allen Spannkräften sowie vom Eigengewicht des beweglichen Klemmbackens 14 sowie der genannten, ihn tragenden Bauteile einschließlich des Tragkörpers 20 dadurch entlastet, daß letzterer in einer Flachführung 30 geführt ist, die an der Vorderseite der Konsole 26 ausgebildet ist. Die Viergelenkanordnung 22 hat zwei Gelenkgabeln 32, die an der Rückwand 24 befestigt und durch je einen Lenker 34 bzw. 36 mit je einer von zwei am Tragkörper 20 befestigten Gelenkgabeln 38 verbunden sind. Im dargestellten Beispiel sind die Lenker 34 und 36 gleichlang, die Gelenkgabeln 32 in gleichen Abständen voneinander angeordnet wie die Gelenkgabeln 38 und außerdem ist die Verbindungslinie der beiden Gelenke an den Gelenkgabeln 32 parallel zur Verbindungslinie der beiden Gelenke an den Gelenkgabeln 38.

Infolgedessen ist die dargestellte Viergelenkanordnung 22 eine Parallelogrammlenkeranordnung, die dafür sorgt, daß der Arm 18 bei all seinen Bewegungen parallel zur Ebene des Sägeblattes 10 bleibt. Durch geringfügige Änderung eines der genannten Gelenkabstände oder der Länge des einen oder anderen Lenkers 34 oder 36 kann jedoch dafür gesorgt werden, daß die Viergelenkanordnung 22 beim Öffnen der Klemmvorrichtung zunächst eine kleine Schwenkung des beweglichen Klemmbackens 14 von der Sägeblattebene weg und dann eine zur Sägeblattebene im wesentlichen parallele Weiterbewegung bewirkt.

Die Flachführung 30 erstreckt sich schräg nach oben vom Sägeblatt 10 weg, im dargestellten Beispiel unter einem Winkel von etwa 40° gegen die Waagerechte. Dementsprechend sind die Lenker 34 und 36 in einer - vorzugsweise gemeinsamen - schrägen Ebene schwenkbar. Um die Aufwärtsbewegung des Tragkörpers 20 und der mit ihm verbundenen Bauteile zu erleichtern, ist eine Gewichtsausgleichsvorrichtung 40 vorgesehen; diese ist im dargestellten Beispiel eine Gasfeder, die mit einem Ende am Lenker 34 und mit ihrem anderen Ende an der Konsole 26 angelenkt ist.

Der Tragkörper 20 ist zwischen zwei parallelen Führungsflächen 42 der Flachführung 30 im wesentlichen spielfrei geführt. Die Führungsflächen 42 können Gleitflächen sein, die entsprechende Gleitflächen des Tragkörpers 20 unmittelbar berühren. Alternativ können in die Führungsflächen 42 oder in den Tragkörper 20 Kugeln eingebettet sein, um die Bewegungen des Tragkörpers von Gleitreibung freizuhalten. Zur Flachführung 30 gehört im dargestellten Beispiel ferner ein Paar Klemmflächen 44, die sich in einem Abstand voneinander normal zu den Führungsflächen 42 in je einer senkrechten Ebene erstrecken und durch den Zwischenraum zwischen den Führungsflächen 42 unterbrochen sind.

Durch diesen Zwischenraum sowie durch den Tragkörper 20 und das daran befestigte Ende des Arms 18 hindurch erstreckt sich eine waagerechte, zu den Klemmflächen 44 normale Welle 46, die im Tragkörper 20 axial verschiebbar gelagert ist. Am äußeren Ende der Welle 46 ist eine Nabe 48 befestigt, die einen Spannhebel 50 trägt; am inneren Ende ist ein Nocken 52 befestigt, der eine der inneren Klemmfläche 44 zugewandte Stirnfläche in der Art einer Axialkurvenscheibe aufweist. Der Nocken 52 liegt an einem Wellenbund 54 an und ist durch ein Paar Muttern 56 festgehalten.

Innerhalb eines Hohlraums des Arms 18 ist eine Druckfeder 58 in Gestalt eines Tellerfederpakets zwischen dem Tragkörper 20 und einem Paar auf die Welle 46 aufgeschraubter Muttern 60 derart eingespannt, daß die Welle 46 in ihrer Achsrichtung nach außen vorgespannt und dadurch bestrebt ist, den Nocken an der inneren Klemmfläche 44 anliegend zu halten. Die Welle 46 läßt sich mit dem Spannhebel 50 zwischen einer Lösestellung und einer Spannstellung verdrehen. In der Lösestellung ist der Tragkörper 20 in der Flachführung 30 frei verschiebbar; in der Klemmstellung ist er - und somit auch der Arm 18 - mit der Konsole 26 starr verspannt.

Die Flachführung 30 und der Innenraum der Konsole 26 sind durch Faltenbälge 62 vor Verschmutzung geschützt.

Da die Klemmvorrichtung im dargestellten Beispiel für eine waagerecht angeordnete Bandsäge vorgesehen ist, weist der Arm 18 einen waagerechten Schenkel 64 und einen entsprechend der Neigung der Flachführung 30 geneigten Schenkel 66 auf. Am freien Ende des waagerechten Schenkels 64 ist der bewegliche Klemmbacken 14 mittels eines Kugelgelenks 68 abgestützt; zu diesem gehört eine im Kopfstück 16 normal zur Sägeblattebene, also waagerecht, verschiebbar geführte Gelenkpfanne 70, die durch eine zentrale Feder 72 in Richtung zum Sägeblatt 10 hin vorgespannt ist. Dieser Vorspannung wirken Schrauben 74 entgegen, die durch je eine Distanzbüchse 76 hindurch in den beweglichen Klemmbacken 14 eingeschraubt sind und sich über je eine Feder 78, z.B. ein Tellerfederpaket, am Kopfstück 16 abstützen. Die Distanzbüchsen 76 haben im Kopfstück 16 radiales Spiel. Somit ist dafür gesorgt, daß der bewegliche Klemmbacken 14 kleine Schwenkungen ausführen kann, um sich dem Sägeblatt 10 auch dann anpassen zu können, wenn der Arm 18 gegen die Sägeblattebene leicht geneigt sein sollte.

## Patentansprüche

1. Sägeblatt-Klemmvorrichtung für Sägenbearbeitungsmaschinen, mit einem ortsfesten Klemmbacken (12) und einem beweglichen Klemmbacken (14), der gelenkig mit einer Konsole (26) verbunden und in einer Klemmstellung festspannbar ist, in der er ein Sägeblatt (10) gegen den ortsfesten Klemmbacken (12) drückt,
dadurch **gekennzeichnet,** daß
der bewegliche Klemmbacken (14) an einem Tragkörper (20) abgestützt ist, der für eine leicht bogenförmige, von der Sägeblattebene nur geringfügig abweichende, Bewegung des beweglichen Klemmbackens (14) vom ortsfesten Klemmbacken (12) weg mittels einer Flachführung (30) an der Konsole (26) verschiebbar geführt ist, an dieser festspannbar ist und mit der Konsole (26) zusätzlich durch eine Viergelenkanordnung (22) verbunden ist.

2. Sägeblatt-Klemmvorrichtung nach Anspruch 1,
dadurch **gekennzeichnet,** daß die Flachführung (30) zwei einander zugewandte parallele, zur Sägeblattebene normale, ebene Führungsflächen (42) aufweist, zwischen denen der Tragkörper (20) verschiebbar ist.

3. Sägeblatt-Klemmvorrichtung nach Anspruch 2,
dadurch **gekennzeichnet,** daß die Flachführung (30) gegen die Waagerechte geneigt ist.

4. Sägeblatt-Klemmvorrichtung nach Anspruch 3,
dadurch **gekennzeichnet,** daß die Viergelenkanordnung (22) eine Gewichtsausgleichsvorrichtung (40) aufweist.

5. Sägeblatt-Klemmvorrichtung nach Anspruch 3 oder 4,
dadurch **gekennzeichnet,** daß der bewegliche Klemmbacken (14) mit dem Tragkörper (20) durch einen gekröpften Arm (18) verbunden ist, der einen waagerechten Schenkel (64) und einen entsprechend der Neigung der Flachführung (30) geneigten Schenkel (66) aufweist.

6. Sägeblatt-Klemmvorrichtung nach einem der Ansprüche 1 bis 5,
dadurch **gekennzeichnet,** daß die Viergelenkanordnung (22) zwei parallele Lenker (34, 36) aufweist.

7. Sägeblatt-Klemmvorrichtung nach einem der Ansprüche 1 bis 6,
dadurch **gekennzeichnet,** daß im Tragkörper (20) eine Welle (46) gelagert ist, die an einem Ende einen Spannhebel (50) und am anderen Ende einen Nocken (52) trägt, der durch Drehen des Spannhebels (50) an der Flachführung (30) festspannbar ist.

8. Sägeblatt-Klemmvorrichtung nach Anspruch 7 in Verbindung mit Anspruch 2,
dadurch **gekennzeichnet,** daß die Flachführung (30) zwei zur Sägeblattebene parallele Klemmflächen (44) für den Nocken (52) aufweist.

## Claims

1. A saw blade clamping device for saw finishing machines, comprising a stationary clamping jaw (12) and a movable clamping jaw (14) which is hingedly connected to a bracket (26) and adapted to be fastened in clamping position in which it presses a saw blade (10) against the stationary clamping jaw (12), **characterized** in that the movable jaw (14) is carried by a support member (20) which is guided for displacement on the bracket (26) by a flat guide means (30) to cause a slightly arcuate movement, deviating only a little from the plane of the saw blade, of the movable clamping jaw (14) away from the stationary clamping jaw (12), which support member further is adapted to be clamped to the bracket (26) and is connected to the same in addition by a four-joint arrangement (22).

2. The saw blade clamping device as claimed in claim 1, characterized in that the flat guide means (30) has two parallel, planar guide surfaces (42) facing each other and extending at right angles to the plane of the saw blade, the support member (20) being displaceable between them.

3. The saw blade clamping device as claimed in claim 2, characterized in that the flat guide means (30) is inclined with respect to the horizontal.

4. The saw blade clamping device as claimed in claim 3, characterized in that the four-joint arrangement (22) comprises a weight balancing means (40).

5. The saw blade clamping device as claimed in claim 3 or 4, characterized in that the movable clamping jaw (14) is connected to the support member (20) by a cranked arm (18) which includes a horizontal limb (64) and a limb (66) inclined in accordance with the inclination of the flat guide means (30).

6. The saw blade clamping device as claimed in any one of claims 1 to 5, characterized in that the four-joint arrangement (22) comprises two parallel links (34, 36).

7. The saw blade clamping device as claimed in any one of claims 1 to 6, characterized in that the support member (20) supports a shaft (46) which carries a clamping lever (50) at one end and a cam (52) at the other end, the cam being adapted to be clamped at the flat guide means (30) by turning of the clamping lever (50).

8. The saw blade clamping device as claimed in claim 7 in combination with claim 2, characterized in that the flat guide means (30) has two clamping surfaces (44) for the cam (52) extending parallel to the plane of the saw blade.

## Revendications

1. Dispositif de serrage de lames de scie pour des machines à usiner des scies, comportant une mâchoire de serrage fixe en position (12) et une mâchoire de serrage mobile (14) qui est reliée de façon articulée à une console (26) et qui peut être serrée dans uné position de serrage dans laquelle elle presse une lame de scie (10) contre la mâchoire de serrage fixe (12),
caractérisé en ce que la mâchoire de serrage mobile (14) s'appuie contre un corps de support (20) de la mâchoire de serrage mobile (14) qui est guidé de façon mobile pour un mouvement légèrement en forme d'arc et ne s'écartant seulement de peu du plan de la lame de scie en éloignement de la mâchoire de serrage fixe (12) au moyen d'un guidage plat (30) sur la console (26), ladite mâchoire mobile (14) pouvant être serrée contre la console (26) et étant reliée à cette console (26) en supplément par un agencement à quadrilatère articulé (22).

2. Dispositif de serrage de lames de scie selon la revendication 1,
caractérisé en ce que le guidage plat (30) présente deux surfaces de guidages (42) planes, orientées l'une vers l'autre, parallèles, perpendiculaires au plan de la lame de scie, entre lesquelles le corps de support (20) est mobile.

3. Dispositif de serrage de lames de scie selon la revendication 2,
caractérisé en ce que le guidage plat (30) est incliné par rapport à l'horizontale.

4. Dispositif de serrage de lames de scie selon la revendication 3,
caractérisé en ce que l'agencement à quadrilatère articulé (22) présente un dispositif d'équilibrage de poids (40).

5. Dispositif de serrage de lames de scie selon l'une ou l'autre des revendications 3 et 4,
caractérisé en ce que la mâchoire de serrage mobile (14) est reliée au corps de support (20) par un bras coudé (18) qui présente une branche horizontale (64) et une branche (66) inclinée en correspondance de la pente du guidage plat (30).

6. Dispositif de serrage de lames de scie selon l'une quelconque des revendications 1 à 5,
caractérisé en ce que l'agencement à quadrilatère articulé (22) présente deux bielles parallèles (34, 36).

7. Dispositif de serrage de lames de scie selon l'une quelconque des revendications 1 à 6,
caractérisé en ce que dans le corps de support (20) est monté un arbre (46) qui porte sur une extrémité un levier de serrage (50) et sur l'autre extrémité une came (52) qui peut être serrée contre le guidage plat (30) par rotation du levier de serrage (50).

8. Dispositif de serrage de lames de scie selon la revendication 7 et en dépendance de la revendication 2,
caractérisé en ce que le guidage plat (30) présente deux surfaces de serrage (44) parallèles par rapport au plan de la lame de scie pour la came (52).
